# EUROPÄISCHE PATENTSCHRIFT

(11) **EP 3 112 240 B1**
(45) Veröffentlichungstag und Bekanntmachung des Hinweises auf die Patenterteilung: **03.07.2024**
(21) Anmeldenummer: 16176444.4
(22) Anmeldetag: 27.06.2016
(51) Int. Cl.: B62K 21/12, B62J 11/00

(54) **FAHRRAD-TRINKFLASCHE**
BICYCLE DRINKING BOTTLE
BIDON POUR VÉLO

(30) Priorität: 02.07.2015 DE 202015004670 U
(43) Veröffentlichungstag der Anmeldung: 04.01.2017
(73) Patentinhaber: Canyon Bicycles GmbH, 56073 Koblenz (DE)
(72) Erfinder: Kohl, Wolfgang, 91126 Schwabach (DE); Adomeit, Michael, 56068 Koblenz (DE); Schuchnigg, Lukas, 56068 Koblenz (DE)
(74) Vertreter: dompatent von Kreisler Selting Werner - Partnerschaft von Patent- und Rechtsanwälten mbB

(56) Entgegenhaltungen:
- DE-A1-102013 112 665
- US-A- 3 920 140
- US-A- 4 176 770
- US-A- 4 441 638
- US-A- 5 301 858
- US-A- 5 887 774
- US-A1- 2013 032 001
- US-A1- 2014 091 121
- US-A1- 2014 231 479

## Beschreibung

Die Erfindung betrifft eine Fahrrad-Trinkflasche sowie ein Fahrrahlenker-System mit Trinkflasche.

Insbesondere bei Zeit-Fahrrädern und Triathlon-Fahrrädern ist es bekannt, eine Trinkflasche nicht am Unterrohr oder am Sattelrohr zu befestigen, sondern in den Lenker zu integrieren. So ist beispielsweise aus FR 2 678 231 ein Triathlon-Lenker mit integrierter Trinkflasche bekannt. Hierbei handelt es sich um einen einstückig ausgebildeten Lenker, der zwischen den Unterarmauflagen einen Hohlraum aufweist, in dem Flüssigkeit angeordnet werden kann. Ein aerodynamisch ausgebildeter Fahrradlenker für ein Zeit-Fahrrad und ein Triathlon-Fahrrad ist ferner aus EP 1 894 824 bekannt. Die Trinkflasche ist hierbei ebenfalls in den Lenker integriert.

Lenker von Zeit-Fahrrädern sowie Triathlon-Fahrrädern sind ferner mit Unterarmauflagen sowie Greifelementen verbunden. Die zusätzlichen Greifelemente dienen zum Greifen des Lenkers, wenn die Unterarme auf den Unterarmauflagen aufliegen. Hierbei sind die Unterarmauflagen und gegebenenfalls auch die Zusatz-Greifelemente über ein Fixierelement mit dem Lenker bzw. der Lenkerstange verbunden. Die Unterarmauflage und gegebenenfalls auch die Greifelemente sind hierbei höhenverstellbar.

DE 10 2013 112 665 A1 beschreibt ein Fahrradlenker-System, bei dem eine Trinkflasche über Rastelemente mit der Lenkereinheit eines Fahrrads verbunden ist. Dokument US 2014/091121 A1 zeigt eine Fahrrad-Trinkflasche mit den Merkmalen der Präambel des Anspruchs 1.

Aufgabe der Erfindung ist es eine Fahrrad-Trinkflasche zu schaffen, die aerodynamisch ausgebildet ist und insbesondere für Zeit-Fahrräder geeignet ist. Ferner ist es Aufgabe ein entsprechendes Fahrradlenker-System zu schaffen.

Die Lösung der Aufgabe erfolgt erfindungsgemäß durch eine Fahrrad-Trinkflasche nach Anspruch 1 beziehungsweise ein Fahrradlenker-System gemäß Anspruch 11.

Die erfindungsgemäße Fahrrad-Trinkflasche, die insbesondere für Zeit-Fahrräder sowie Triathlon-Fahrräder geeignet ist, weist einen Flüssigkeitsbehälter zur Aufbewahrung von Flüssigkeiten auf. Der Flüssigkeitsbehälter weist zwei einander gegenüberliegende Seitenwände, eine die Seitenwände miteinander verbindende Rückwand und eine die Seitenwände verbindende Vorderwand auf. Ferner ist der Flüssigkeitsbehälter mit einem Deckel verschlossen. Hierbei kann sich der Deckel insbesondere über eine gesamte Oberseite oder auch nur einen Teil der Oberseite des Flüssigkeitsbehälters erstrecken. Ferner ist der Flüssigkeitsbehälter an seiner Unterseite von einem Bodenelement verschlossen. Das Bodenelement ist entsprechend mit den Seitenwänden, der Rückwand und der Vorderwand verbunden. Insbesondere ist der Flüssigkeitsbehälter mit Ausnahme des Deckels einstückig ausgebildet.

Erfindungsgemäß weisen die beiden Seitenwände jeweils eine Ausnehmung zur Aufnahme jeweils eines Fixierelements auf. Bei dem Fixierelement handelt es sich um die mit einer Lenkstange eines Fahrradlenkers verbundenen Fixierbeziehungsweise Halteelemente für die Unterarmauflagen und oder die Zusatz-Greifelemente. Durch das Vorsehen derartiger Ausnehmungen ist es möglich, die Fixierelemente zumindest teilweise innerhalb einer Außenkontur der Trinkflasche anzuordnen. Dies hat erhebliche aerodynamische Vorteile, da die Aerodynamik durch die Fixierelemente nicht mehr gestört ist. In aerodynamischer Sicht werden die drei Bauteile, das heißt die zwei Fixierelemente und die Trinkflasche zu einem Bauteil zusammengefasst. Bereits hierdurch kann die Aerodynamik deutlich verbessert werden.

Des Weiteren wurde festgestellt, dass zwischen einer Trinkflasche, die auf dem Fahrradlenker zwischen zwei derartigen Fixierelementen angeordnet ist und den Fixierelementen bei beabstandeter Anordnung Verwirbelungen auftreten, die die Aerodynamik erheblich verschlechtern.

In bevorzugter Ausführungsform sind die beiden Ausnehmungen nach außen offen. Bei den Ausnehmungen handelt es sich insbesondere um Einbuchtungen in den Seitenwänden. Dies hat insbesondere den Vorteil, dass ein einfaches Aufstecken der Trinkflasche von oben auf die Fixierelemente möglich ist.

Gemäß der Erfindung sind die Ausnehmungen nach unten, das heißt im Bereich des Bodenelements der Trinkflasche offen.

Bei einer besonders bevorzugten Weiterbildung der Erfindung sind in den Ausnehmungen Halteelemente zur Verbindung mit den Fixierelementen vorgesehen. Derartige Halteelemente, bei denen es sich insbesondere um Rastelemente handelt, dienen dazu, die Trinkflasche an den Fixierelementen zu halten. Hierbei weisen die Fixierelemente mit den Halteelementen korrespondierende Halteelemente, insbesondere Rastelemente auf. Die Trinkflasche kann somit in besonders bevorzugter Ausführungsform von oben auf die Fixierelemente beziehungsweise zwischen die beiden Fixierelemente eingesteckt werden, wobei eine lösbare Verbindung zwischen den Halteelementen in den Ausnehmungen und den an den Fixierelementen vorgesehenen Halteelementen erfolgt. Insofern weisen die beiden Ausnehmungen eine Doppelfunktion auf, da sie einerseits zur aerodynamischen Integration der Fixierelemente und andererseits zum Halten der Trinkflasche ausgebildet sein können.

Die beiden Ausnehmungen sind vorzugsweise derart ausgebildet, dass die beiden Fixierelemente in montiertem Zustand der Trinkflasche mit den Seitenwänden beziehungsweise den Außenseiten der Seitenwände abschließen. Hierdurch ist das Auftreten von Verwirbelungen vermieden, so dass die Aerodynamik weiter verbessert ist.

Zur Verbesserung der Aerodynamik ist die Vorderwand der Trinkflasche konvex ausgebildet. Ferner ist es bevorzugt, dass die Vorderwand in die beiden Seitenwände der Trinkflasche stufenfrei übergeht, um eine gute Aerodynamik zu gewährleisten.

Erfindungsgemäß, weist der Flüssigkeitsbehälter einen Zusatz-Flüssigkeitsbehälter auf. Der Zusatz-Flüssigkeitsbehälter schließt sich insbesondere nach unten an den Flüssigkeitsbehälter an. In montiertem Zustand ist es bevorzugt, dass der Zusatz-Flüssigkeitsbehälter vor dem Gabelrohr des Fahrradrahmens angeordnet ist. Dies hat den erheblichen Vorteil, dass die Aerodynamik des Fahrrads hierdurch nicht beeinträchtigt wird, wenn ein zusätzlicher Behälter für Flüssigkeit vorgesehen ist. Eine Beeinträchtigung der Aerodynamik findet insofern nicht oder nur geringfügig statt, da die Luft ohnehin an dem Gabelschaft vorbeiströmen muss.

Der vorzugsweise an der Unterseite des Flaschenbehälters angeordnete Zusatz-Flaschenbehälter ist mit diesem derart verbunden, dass ein gemeinsamer Flüssigkeitsaufnahmeraum ausgebildet ist.

Des Weiteren ist es bevorzugt, dass die beiden Flüssigkeitsbehälter eine gemeinsame, insbesondere stufenfrei ausgebildete Vorderwand und/oder gemeinsame insbesondere stufenfrei ausgebildete Seitenwände aufweisen.

Erfindungsgemäß, ist die Rückwand des Flüssigkeitsbehälters gegenüber der Rückwand des Zusatz-Flüssigkeitsbehälters versetzt angeordnet. Hierbei ist die Zusatz-Rückwand des Zusatz-Flüssigkeitsbehälters in Fahrrichtung nach vorne, das heißt in Richtung der Vorderwand versetzt. Insbesondere ist es möglich, dass der Zusatz-Flüssigkeitsbehälter vor dem Gabelrohr und der Flüssigkeitsbehälter oberhalb des Gabelrohrs im Bereich eines Lenkervorbaus angeordnet sind.

Die Zusatz-Rückwand ist erfindungsgemäß konkav gekrümmt ausgebildet, wobei die Krümmung an die Krümmung des Gabelrohrs angepasst ist.

Zur weiteren Verbesserung der Aerodynamik ist es bevorzugt, dass die Vorderwand der Fahrrad-Trinkflasche insbesondere in Fahrtrichtung, das heißt nach vorne geneigt ist. Die Vorderwand verläuft hierbei vorzugsweise im Wesentlichen parallel zum Gabelrohr.

Des Weiteren betrifft die Erfindung ein Fahrradlenker-System, das insbesondere für Zeit-Fahrräder und Triathlon-Fahrräder geeignet ist. Das Fahrradlenker-System weist eine Lenkstange auf. Hierbei handelt es sich um das vorzugsweise horizontal ausgebildete Element der Lenkstange, an dessen Ende die Griffelemente angeordnet sind. In der Mitte der Lenkstange sind zwei Fixierelemente, die zur Aufnahme von Unterarmauflagen und/oder Zusatzgreifelementen dienen verbunden. Erfindungsgemäß sind die beiden Fixierelemente derart angeordnet, dass zwischen diesen eine Fahrrad-Trinkflasche wie vorstehend beschrieben angeordnet werden kann, so dass die beiden Fixierelemente zumindest teilweise in die beiden in den Seitenwänden des Flüssigkeitsbehälters der Trinkflasche vorgesehenen Ausnehmungen angeordnet sind.

Das Fahrradlenker-System weist vorzugsweise eine Fahrrad-Trinkflasche wie vorstehend beschrieben insbesondere in den bevorzugten Weiterbildungen auf. Ferner ist das Fahrradlenker-System wie vorstehend anhand der Fahrrad-Trinkflasche beschrieben vorteilhaft weitergebildet.

Bevorzugt ist es, dass die Fixierelemente von der Trinkflasche weg, das heißt nach außen weisende Aufnahmeelemente aufweisen. Diese dienen zur Verbindung mit jeweils einer Unterarmaufnahme und/oder zur Verbindung mit einem Zusatz-Greifelement. Insbesondere ist bevorzugt, dass die Fixierelemente höhenverstellbar sind, so dass die Höhe der Unterarmauflagen und/oder der Zusatz-Greifelemente einstellbar ist.

Die jeweiligen Außenseiten der Fixierelemente gehen bei montierter Fahrrad-Trinkflasche vorzugsweise stufenfrei in die Seitenwände beziehungsweise die Außenseiten der Seitenwände über. Durch eine derartige Integration der Fixierelemente in die aerodynamische Außenkontur der Fahrrad-Trinkflasche kann eine sehr gute Aerodynamik realisiert werden.

Da in bevorzugter Ausführungsform die Trinkflasche unabhängig von den Fixierelementen ist, ist es möglich, das Fahrrad auch ohne Trinkflasche zu verwenden. Die Trinkflasche selbst stellt kein tragendes Bauteil, insbesondere nicht für die Unterarmauflagen dar. Des Weiteren hat die einfache Abnehmbarkeit der Fahrrad-Trinkflasche den Vorteil, dass diese auf einfache Weise gereinigt oder ausgetauscht werden kann. Auch können unterschiedliche Größen an Trinkflaschen auf einfache Weise ausgebildet sein, so dass je nach Anforderung Trinkflaschen mit unterschiedlichem Fassungsvolumen verwendet werden können.

Nachfolgend wird die Erfindung anhand einer bevorzugten Ausführungsform unter Bezugnahme auf die anliegenden Zeichnungen näher erläutert.

Es zeigen:
- Fig. 1: eine schematische Seitenansicht einer Fahrrad-Trinkflasche,
- Fig. 2: eine schematische Schnittansicht entlang der Linie II-II in Fig. 1,
- Fig. 3: eine schematische Schnittansicht entlang der Linie III-III in Fig. 1,
- Fig. 4: eine schematische Vorderansicht eines Fahrradlenker-Systems und
- Fig. 5: eine schematische Schnittansicht entlang der Linie V-V in Fig. 4.

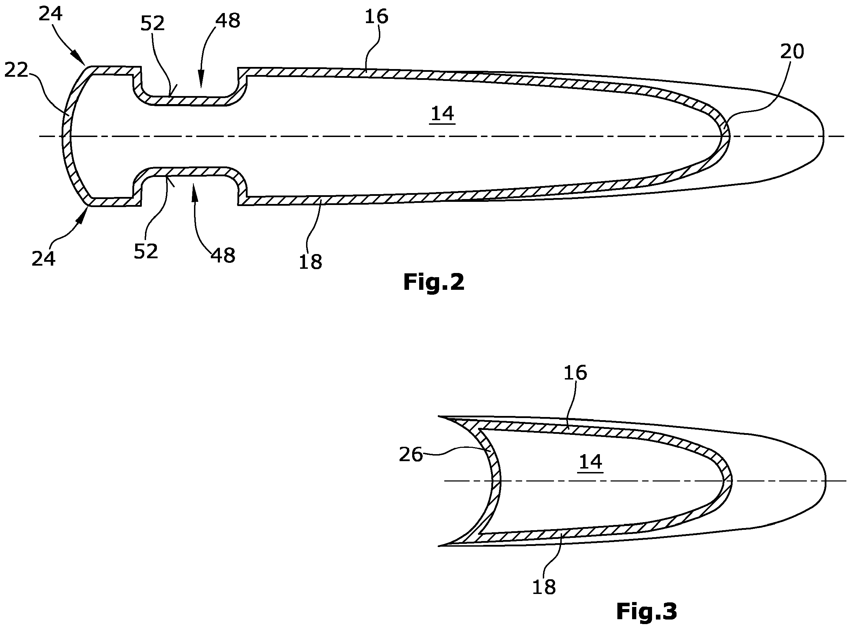

Die Fahrrad-Trinkflasche weist einen Flüssigkeitsbehälter 10 sowie einen Zusatz-Flüssigkeitsbehälter 12 auf, wobei die beiden Flüssigkeitsbehälter 10, 12 einen gemeinsamen Aufbewahrungsraum 14 (Fig. 2 und 3) für Flüssigkeit bilden. Die Flüssigkeitsbehälter weisen im dargestellten Ausführungsbeispiel gemeinsam einander gegenüberliegende Seitenwände 16, 18 auf. Die beiden Seitenwände 16, 18 sind bei montierter Flasche in Fahrtrichtung im vorderen Bereich über eine Vorderwand 20 miteinander verbunden. Hierbei gehen die beiden Seitenwände stufenfrei beziehungsweise kontinuierlich in die Vorderwand über. Ferner weist der obere Flüssigkeitsbehälter 10 eine Rückwand 22 auf, wobei die Seitenwände 16, 18 wiederum stufenfrei in die Rückwand 22 übergehen. Insbesondere sind die Übergangsbereiche 24 abgerundet ausgebildet.

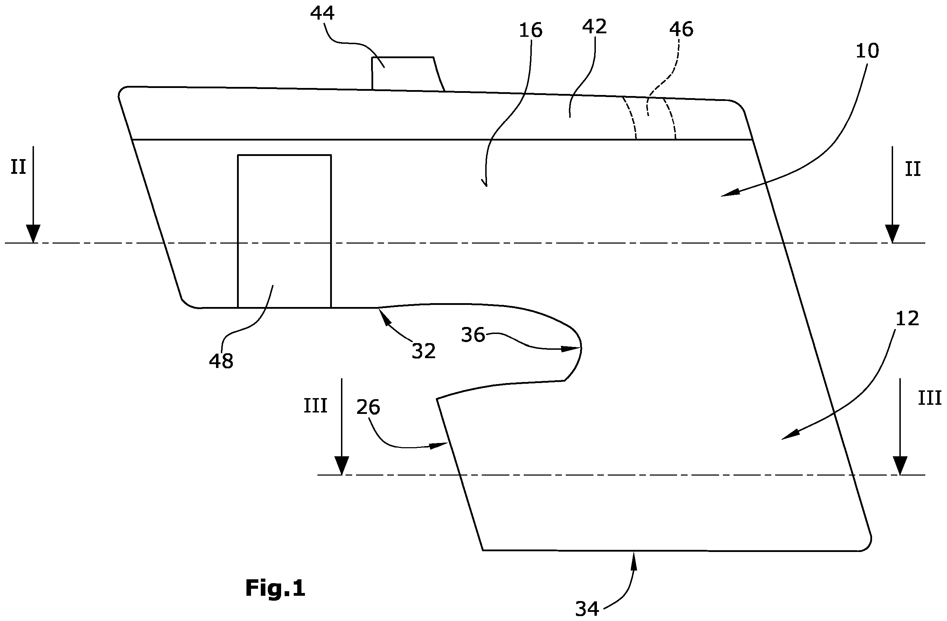

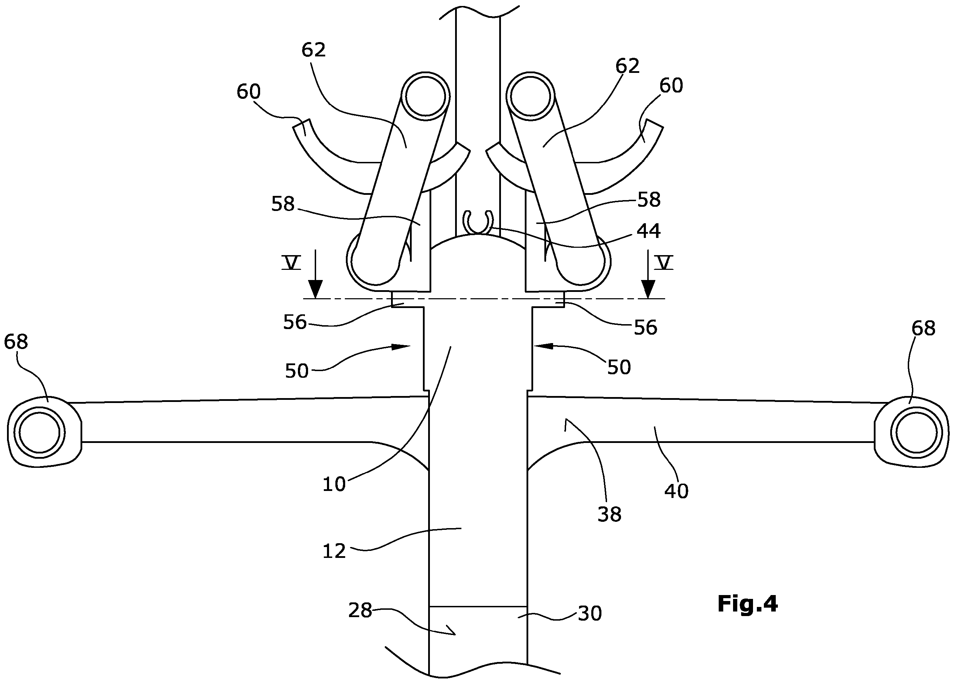

Auch der Zusatz-Flüssigkeitsbehälter 12 weist eine Rückwand 26 auf. Diese ist ebenfalls mit den Seitenwänden 16, 18 verbunden, wobei hier jedoch kein kontinuierlicher Übergang besteht. Vielmehr ist die Zusatz-Rückwand 26 konkav ausgebildet, so dass sie an einer Außenseite 28 eines Gabelrohrs 30 (Fig. 4) anliegt. Ferner weisen die beiden Flüssigkeitsbehälter jeweils ein Bodenelement 32, 34 auf. Das Bodenelement 32 des oberen Flüssigkeitsbehälters 10 ist über eine Zwischenwand 36 (Fig. 1) mit der Zusatzrückwand 26 verbunden. In montiertem Zustand liegt eine Zwischenwand 36 an einer Vorderseite 38 (Fig. 4) einer Lenkstange 40 an und ist daher ebenfalls konkav ausgebildet. Die beiden einen gemeinsamen Aufnahmeraum ausbildenden Flüssigkeitsbehälter 10, 12 sind mit einem gemeinsamen Deckel 42 verschlossen. Dieser erstreckt sich im dargestellten Ausführungsbeispiel über die gesamte Oberseite des oberen Flüssigkeitsaufnahmebehälters 10. Am Deckel 42 ist eine Trinkhalmfixierung 44 vorgesehen. Ferner weist der Deckel 42 eine Öffnung 44 zum Einführen eines Trinkhalms auf.

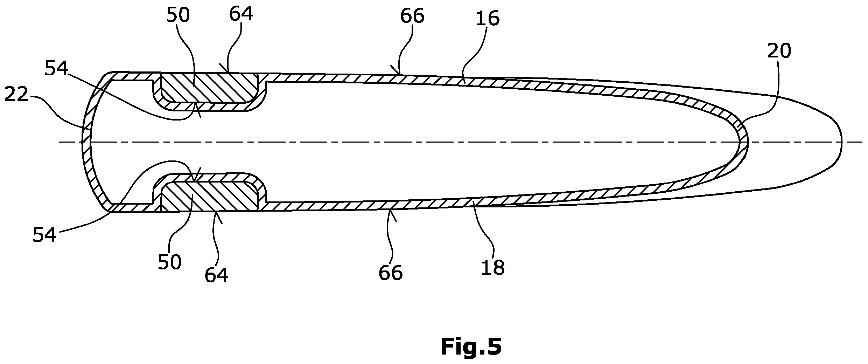

Erfindungsgemäß weisen die beiden Seitenwände 16, 18 jeweils eine Ausnehmung 48 auf. Die beiden Ausnehmungen 48 sind einander gegenüberliegend angeordnet. Die beiden Ausnehmungen 48 dienen zur Aufnahme von mit der Lenkstange 40 verbundenen Fixierelementen 50 (Fig. 5). Ferner weisen die Ausnehmungen 48 in bevorzugter Ausführungsform an einer Innenseite 52 Halteelemente wie Rastelemente auf. Diese nicht dargestellten Halteelemente wirken mit Halteelementen zusammen, die jeweils an einer Außenseite 54 (Fig. 5) der beiden Fixierelemente 50 vorgesehen sind.

Die Fixierelemente 50 sind mit der Lenkstange 40 (Fig. 4) verbunden. Dies erfolgt wie bei derartigen Fixierelemente üblich. Die Fixierelemente 50 sind mit Aufnahmeelementen 56 (Fig. 4) verbunden. Die Aufnahmeelemente 56 weisen von dem Flüssigkeitsbehälter 10 weg beziehungsweise nach außen. Die Aufnahmeelemente dienen zur Verbindung mit gegebenenfalls gesonderten weiteren Aufnahmeelementen 58, die Unterarmauflagen 60 tragen. Die Aufnahmeelemente 58 dienen weiterhin zur Verbindung mit ZusatzGreifelementen 62. Bei den Unterarmauflagen 60 sowie den Zusatz-Greifelemente 62 handelt es sich um bei Zeit-Fahrrändern beziehungsweise Triathlon Fahrrädern übliche Bauteile.

Die Abmessungen der Ausnehmungen 48 (Fig. 2) sind bezogen auf die Fixierelemente 50 derart ausgebildet, dass eine Außenseite 64 der Fixierelemente 50 mit den Seitenwänden 16, 18 beziehungsweise den Außenseiten 66 der Seitenwände 16, 18 stufenfrei ist. Es erfolgt ein gleichmäßiger stufenfreier Übergang zwischen den Außenseiten 64 und 66.

Die Lenkstange 40 ist an ihren äußeren Enden mit Griffelementen 68 (Fig. 4) verbunden.

Aufgrund der aerodynamischen Ausgestaltung der Flüssigkeitsbehälter 10, 12 und der Integration der Fixierelemente 50 in die Ausnehmungen 48 der Seitenwände 16, 18 ist ein äußerst aerodynamisches Fahrradlenker-System ausgebildet.

## Patentansprüche

1. Fahrrad-Trinkflasche, insbesondere für Zeit-Fahrräder, mit einem Flüssigkeitsbehälter (10), mit
zwei einander gegenüberliegenden Seitenwänden (16, 18),
einer die Seitenwände (16, 18) miteinander verbindenden Rückwand (22),
einer die Seitenwände (16, 18) miteinander verbindenden Vorderwand (20),
einem die Trinkflasche verschließenden Deckel (42) und
einem Bodenelement (32),
und wobei die beiden Seitenwände (16, 18) Ausnehmungen (48) zur Aufnahme von mit einer Lenkerstange (40) eines Fahrradlenkers verbundenen Fixierelementen (50) aufweisen, wobei es sich bei den Fixierelementen (50) um mit einer Lenkstange (40) verbundene Fixier- bzw. Halteelement für Unterarmauflagen und/oder Zusatz-Greifelemente handelt,
der Flüssigkeitsbehälter (10) mit einem Zusatz-Flüssigkeitsbehälter (12) verbunden ist,
der Zusatz-Flüssigkeitsbehälter (12) eine zur Rückwand (22) des Flüssigkeitsbehälters (10) versetzt angeordnete Zusatz-Rückwand (26) aufweist, und **dadurch gekennzeichnet, dass** die Ausnehmungen (48) nach unten, zum Aufstecken der Trinkflasche von oben auf die Fixierelemente (50) offen sind, und
die Zusatz-Rückwand (26) konkav gekrümmt ist.

2. Fahrrad-Trinkflasche nach Anspruch 1, **dadurch gekennzeichnet, dass** die Ausnehmungen (48) nach außen offen sind.

3. Fahrrad-Trinkflasche nach einem der Ansprüche 1 bis 2, **dadurch gekennzeichnet, dass** in den Ausnehmungen (48) Halteelemente zur Verbindung mit den Fixierelementen (50) vorgesehen sind.

4. Fahrrad-Trinkflasche nach einem der Ansprüche 1 bis 3, **dadurch gekennzeichnet, dass** die Vorderwand (20) konvex ausgebildet ist und vorzugsweise stufenfrei in die Seitenwände (16, 18) übergeht.

5. Fahrrad-Trinkflasche nach einem der Ansprüche 1 bis 4, **dadurch gekennzeichnet, dass** der Zusatz-Flüssigkeitsbehälter (12) mit einer Unterseite des Flüssigkeitsbehälters verbunden ist, wobei die beiden Flüssigkeitsbehälter (10, 12) einen gemeinsamen FlüssigkeitsAufnahmeraum (14) ausbilden.

6. Fahrrad-Trinkflasche nach einem der Ansprüche 1 bis 5, **dadurch gekennzeichnet, dass** der Zusatz-Flüssigkeitsbehälter (12) und der Flüssigkeitsbehälter (10) eine gemeinsame, insbesondere stufenfrei Vorderwand (20) und/oder gemeinsame insbesondere stufenfreie Seitenwände (16, 18) aufweisen.

7. Fahrrad-Trinkflasche nach einem der Ansprüche 1 bis 6, **dadurch gekennzeichnet, dass** die Zusatz-Rückwand (26) in Richtung der Vorderwand (20) versetzt zur Rückwand (22) des Flüssigkeitsbehälters (10) angeordnete ist.

8. Fahrrad- Trinkflasche nach einem der Ansprüche 1 bis 7, **dadurch gekennzeichnet, dass** die Vorderwand (20) in montiertem Zustand nach vorne geneigt ist.

9. Fahrradlenker-System, insbesondere für Zeitfahrräder, mit
einer Lenkstange (40),
zwei mit der Lenkstange (40) verbundenen Fixierelementen (50) und einer Fahrrad-Trinkflasche nach einem der Ansprüche 1 bis 8.

10. Fahrradlenker-System nach Anspruch 9, **dadurch gekennzeichnet, dass** die Fixierelemente (50) von der Trinkflasche weg weisende Aufnahmeelemente (56, 58) zur Verbindung mit Unterarmauflagen (60) und/oder ZusatzGreifelementen (62) aufweisen.

11. Fahrradlenker-System nach Anspruch 9 oder 10, **dadurch gekennzeichnet, dass** eine Außenseite (64) der Fixierelemente (50) stufenfrei in die Seitenwände (16, 18) übergeht.

## Claims

1. Bicycle drinking bottle, in particular for time trial bicycles, comprising
a liquid container (10) having
two opposite side walls (16, 18),
a rear wall (22) connecting the side walls (16, 18),
a front wall (20) connecting the side walls (16, 18),
a lid (42) closing the drinking bottle, and
a bottom element (32),
and wherein the two side walls (16, 18) have recesses (48) for receiving fixing elements (50) connected with a handlebar (40) of a bicycle steering structure, wherein the fixing elements (50) are fixing or holding elements for forearm supports and/or additional gripping elements and are connected with a handlebar (40),
the liquid container (10) is connected with an additional liquid container (12),
the additional liquid container (12) comprises an additional rear wall (26) offset with respect to the rear wall (22) of the liquid container (10), and
**characterized in that**
the recesses (48) are open in the downward direction for plugging the drinking bottle onto the fixing elements (50) from above, and additional rear wall (26) is concavely curved.

2. Bicycle drinking bottle of claim 1, **characterized in that** the recesses (48) are open to the outside.

3. Bicycle drinking bottle of one of claims 1 to 2, **characterized in that** holding elements are provided in the recesses (48) for connection with the fixing elements (50).

4. Bicycle drinking bottle of one of claims 1 to 3, **characterized in that** the front wall (20) is convex in shape and merges with the side walls (16, 18) preferably in a stepless manner.

5. Bicycle drinking bottle of one of claims 1 to 4, **characterized in** the additional liquid container (12) is connected with a bottom side of the liquid container, wherein the two liquid containers (10, 12) form a common liquid receiving space (14).

6. Bicycle drinking bottle of one of claims 1 to 5, **characterized in that** the additional liquid container (12) and the liquid container (10) have a common, in particular stepless front wall (20) and/or common, in particular stepless side walls (16, 18).

7. Bicycle drinking bottle of one of claims 1 to 6, **characterized in that** the additional rear wall (26) is offset towards the front wall (20) with respect to the rear wall (22) of the liquid container (10).

8. Bicycle drinking bottle of claim of one of claims 1 to 7, **characterized in that** in the mounted state, the front wall (20) is inclined to the front.

9. Bicycle steering structure system in particular for time trial bicycles, comprising
a handlebar (40),
two fixing elements (50) connected with the handlebar (40), and
a bicycle drinking bottle of one of claims 1 to 9.

10. Bicycle steering structure system of claim 9, **characterized in that** the fixing elements (50) have receiving elements (56, 58) directed away from the drinking bottle and serving for connection with forearm supports (60) and/or additional gripping elements (62).

11. Bicycle steering structure system of claim 9 or 10, **characterized in that** an outer side (64) of the fixing elements (50) merges steplessly with the side walls (16, 18).

## Revendications

1. Bidon de vélo, en particulier pour vélos de contre la montre, avec un réservoir de liquide (10) comprenant
deux parois latérales opposées (16, 18),
une paroi arrière (22) reliant les parois latérales (16, 18),
une paroi avant (20) reliant les parois latérales (16, 18),
un couvercle (42) fermant le bidon et
un élément de fond (32),
et dans lequel
les deux parois latérales (16, 18) présentent des évidements (48) permettant d'accueillir des éléments d'immobilisation (50) reliés à un cintre (40) d'un guidon de vélo, les éléments d'immobilisation (50) étant des éléments d'immobilisation ou de retenue, reliés à un cintre (40), pour appuis d'avant-bras et/ou éléments de préhension supplémentaires,
le réservoir de liquide (10) est relié à un réservoir de liquide supplémentaire (12),
le réservoir de liquide supplémentaire (12) présente une paroi arrière supplémentaire (26) agencée de manière décalée par rapport à la paroi arrière (22) du réservoir de liquide (10),
et **caractérisé en ce que** les évidements (48) sont ouverts vers le bas en vue de l'insertion du bidon par le haut sur les éléments d'immobilisation (50), et la paroi arrière supplémentaire (26) est courbée de manière concave.

2. Bidon de vélo selon la revendication 1, **caractérisé en ce que** les évidements (48) sont ouverts vers l'extérieur.

3. Bidon de vélo selon l'une des revendications 1 à 2, **caractérisé en ce que** des éléments de retenue à relier aux éléments d'immobilisation (50) sont prévus dans les évidements (48).

4. Bidon de vélo selon l'une des revendications 1 à 3, **caractérisé en ce que** la paroi avant (20) est convexe et se transforme de manière préférée progressivement en parois latérales (16, 18).

5. Bidon de vélo selon l'une des revendications 1 à 4, **caractérisé en ce que** le réservoir de liquide supplémentaire (12) est relié à une face inférieure du réservoir de liquide, les deux réservoirs de liquide (10, 12) formant un espace commun de réception de liquide (14).

6. Bidon de vélo selon l'une des revendications 1 à 5, **caractérisé en ce que** le réservoir de liquide supplémentaire (12) et le réservoir de liquide (10) présentent une paroi avant (20) commune, en particulier sans étagement, et/ou des parois latérales (16, 18) communes, en particulier sans étagement.

7. Bidon de vélo selon l'une des revendications 1 à 6, **caractérisé en ce que** la paroi arrière supplémentaire (26) est agencée de manière décalée par rapport à la paroi arrière (22) du réservoir de liquide (10) en direction de la paroi avant (20).

8. Bidon de vélo selon l'une des revendications 1 à 7, **caractérisé en ce que** la paroi avant (20) est inclinée vers l'avant à l'état monté.

9. Système de guidon de vélo, en particulier pour vélos de contre la montre, comprenant
un cintre (40),
deux éléments d'immobilisation (50) reliés au cintre (40), et un bidon de vélo selon l'une des revendications 1 à 8.

10. Système de guidon de vélo selon la revendication 9, **caractérisé en ce que** les éléments d'immobilisation (50) présentent des éléments de réception (56, 58) orientés à l'opposé du bidon en vue d'une liaison avec des appuis d'avant-bras (60) et/ou des éléments de préhension supplémentaires (62).

11. Système de guidon de vélo selon la revendication 9 ou 10, **caractérisé en ce qu'**un côté extérieur (64) des éléments d'immobilisation (50) se transforme de manière progressive en parois latérales (16, 18).
